(19)

Europäisches
Patentamt
European
Patent Office
Office européen
des brevets

(11) **EP 3 153 559 A1**

(12) **EUROPEAN PATENT APPLICATION**
published in accordance with Art. 153(4) EPC

(43) Date of publication:
**12.04.2017 Bulletin 2017/15**

(21) Application number: **15803218.5**

(22) Date of filing: **25.05.2015**

(51) Int Cl.:
***C09K 5/04*** *(2006.01)*

(86) International application number:
**PCT/JP2015/064938**

(87) International publication number:
**WO 2015/186557 (10.12.2015 Gazette 2015/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **06.06.2014 JP 2014118163**

(71) Applicant: **Asahi Glass Company, Limited
Tokyo 100-8405 (JP)**

(72) Inventor: **FUKUSHIMA, Masato
Tokyo 100-8405 (JP)**

(74) Representative: **Müller-Boré & Partner
Patentanwälte PartG mbB
Friedenheimer Brücke 21
80639 München (DE)**

(54) **WORKING MEDIUM FOR HEAT CYCLE, COMPOSITION FOR HEAT CYCLE SYSTEM, AND HEAT CYCLE SYSTEM**

(57)    To provide a working fluid for heat cycle containing 1,2-difluoroethylene, which has high stability, and which has cycle performance sufficient as an alternative to R410A (a pseudoazeotropic mixture refrigerant of difluoromethane and pentafluoroethane in a mass ratio of 1:1) or 1,1,1,2-tetrafluoroethane while the influence over global warming is suppressed, a composition for a heat cycle system comprising it, and a heat cycle system employing the composition.

A working fluid for heat cycle, which contains at least two members selected from a saturated hydrofluorocarbon and a hydrofluorocarbon having a carbon-carbon double bond other than 1,2-difluoroethylene, and 1,2-difluoroethylene.

Fig. 2

**Description**

TECHNICAL FIELD

The present invention relates to a working fluid for heat cycle, a composition for a heat cycle system comprising the working fluid, and a heat cycle system employing the composition.

BACKGROUND ART

In this specification, abbreviated names of halogenated hydrocarbon compounds are described in brackets after the compound names, and in this specification, the abbreviated names are employed instead of the compound names as the case requires.

Heretofore, as a working fluid for a heat cycle system such as a refrigerant for a refrigerator, a refrigerant for an air-conditioning apparatus, a working fluid for power generation system (such as exhaust heat recovery power generation), a working fluid for a latent heat transport apparatus (such as a heat pipe) or a secondary cooling fluid, a chlorofluorocarbon (CFC) such as chlorotrifluoromethane or dichlorodifluoromethane or a hydrochlorofluorocarbon (HCFC) such as chlorodifluoromethane has been used. However, influences of CFCs and HCFCs over the ozone layer in the stratosphere have been pointed out, and their use is regulated at present.

Under the above conditions, as a working fluid for a heat cycle system, a hydrofluorocarbon (HFC) which has less influence over the ozone layer, such as difluoromethane (HFC-32), tetrafluoroethane or pentafluoroethane (HFC-125) has been used, instead of CFCs and HCFCs. For example, R410A (a pseudoazeotropic mixture refrigerant of HFC-32 and HFC-125 in a mass ratio of 1:1) and 1,1,1,2-tetrafluoroethane (HFC-134a) are refrigerants which have been widely used. However, it is pointed out that HFCs may cause global warming.

R410A has been widely used for a common air-conditioning apparatus such as a so-called package air-conditioner or room air-conditioner, due to its high refrigerating capacity. However, it has a global warming potential (GWP) of so high as 2,088, and accordingly development of a working fluid with low GWP has been desired. Further, development of a working fluid has been desired on the condition that R410A is simply replaced and existing apparatus will be used as they are.

Further, HFC-134a which has been used as a refrigerant for an automobile air-conditioning system has high GWP of 1430. In addition, in an automobile air-conditioning system, the refrigerant is highly likely to leak out e.g. from a connection hose or a bearing to the air.

In recent years, a hydrofluoroolefin (HFO) i.e. a HFC having a carbon-carbon double bond is expected, which is a working fluid having less influence over the ozone layer and having less influence over global warming, since the carbon-carbon double bond is likely to be decomposed by OH radicals in the air. In this specification, a saturated HFC will be referred to as a HFC and distinguished from a HFO unless otherwise specified. Further, a HFC may be referred to as a saturated hydrofluorocarbon in some cases.

As a working fluid employing a HFO, for example, Patent Document 1 discloses a technique relating to a working fluid using 1,2-difluoroethylene (HFO-1132) which has the above properties and with which excellent cycle performance will be obtained. Patent Document 1 also discloses an attempt to obtain a working fluid comprising HFO-1132 and various HFCs or HFOs in combination for the purpose of increasing the flame retardancy, cycle performance, etc. of the working fluid.

However, Patent document 1 failed to disclose or suggest to combine HFO-1132 with at least two members of a HFC and another HFO to obtain a working fluid, with a view to obtaining a working fluid which is practically useful as an alternative to R410A or HFC-134a comprehensively considering the balance of the performance, the efficiency and the temperature glide.

PRIOR ART DOCUMENT

PATENT DOCUMENT

Patent Document 1: WO2012/157765

DISCLOSURE OF INVENTION

TECHNICAL PROBLEM

It is an object of the present invention to provide a working fluid for heat cycle containing HFO-1132, which has high stability, and which has cycle performance sufficient as an alternative to R410A or HFC-134a while the influence over global warming is suppressed, a composition for a heat cycle system comprising it, and a heat cycle system employing the composition.

SOLUTION TO PROBLEM

The present invention provides a working fluid for heat cycle, a composition for a heat cycle system and a heat cycle system of the following [1] to [13].

[1] A working fluid for heat cycle, which contains at least two members selected from a saturated hydrofluorocarbon and a hydrofluorocarbon having a carbon-carbon double bond other than HFO-1132, and HFO-1132.
[2] The working fluid for heat cycle according to [1], wherein HFO-1132 is trans-1,2-difluoroethylene, cis-1,2-difluoroethylene or a mixture thereof.
[3] The working fluid for heat cycle according to [1] or [2], wherein the proportion of 1,2-difluoroethylene is at most 80 mass% based on the entire amount of the working fluid for heat cycle.
[4] The working fluid for heat cycle according to any one of [1] to [3], wherein the proportion of 1,2-difluoroethylene is from 20 to 80 mass% based on the entire amount of the working fluid for heat cycle.
[5] The working fluid for heat cycle according to any one of [1] to [4], wherein the temperature glide is at most 8°C, which is represented by a difference between the evaporation initiation temperature and the evaporation completion temperature in an evaporator when applied to a standard refrigerating cycle under conditions such that the evaporation temperature is 0°C (in the case of a non-azeotropic mixture, the average temperature of the evaporation initiation temperature and the evaporation completion temperature), the condensing temperature is 40°C (in the case of a non-azeotropic mixture, the average temperature of the condensation initiation temperature and the condensation completion temperature), the supercooling degree (SC) is 5°C, and the degree of superheat (SH) is 5°C.
[6] The working fluid for heat cycle according to any one of [1] to [5], wherein the relative refrigerating capacity ($RQ_{410A}$) calculated in accordance with the following formula (B1) is from 0.70 to 1.60, and the relative coefficient of performance ($RCOP_{R410A}$) calculated in accordance with the following formula (C1) is from 0.85 to 1.20:

$$\text{Relative refrigerating capacity } (RQ_{R410A}) = \frac{\text{Refrigerating capacity of sample } (Q_{sample})}{\text{Refrigerating capacity of R410A } (Q_{R410A})} \quad (B1)$$

$$\text{Relative coefficient of performance } (RCOP_{R410A}) = \frac{\text{Coefficient of performance of sample } (COP_{sample})}{\text{Coefficient of performance of R410A } (COP_{R410A})} \quad (C1)$$

wherein R410A is a mixture of difluoromethane and pentafluoroethane in a mass ratio of 1:1, and the sample is the working fluid to be subjected to relative evaluation; and the refrigerating capacity and the coefficient of performance of each of the sample and R410A are respectively an output (kW), and a value obtained by dividing the output (kW) by the required power consumption (kW), when each of the sample and R410A is applied to a standard refrigerating cycle under conditions such that the evaporation temperature is 0°C (in the case of a non-azeotropic mixture, the average temperature of the evaporation initiation temperature and the evaporation completion temperature), the condensing temperature is 40°C (in the case of a non-azeotropic mixture, the average temperature of the condensation initiation temperature and the condensation completion temperature), the supercooling degree (SC) is 5°C, and the degree of superheat (SH) is 5°C
[7] The working fluid for heat cycle according to any one of [1] to [6], wherein the relative refrigerating capacity ($RQ_{R134a}$) calculated in accordance with the following formula (B2) is from 0.70 to 1.60, and the relative coefficient of performance ($RCOP_{R134a}$) calculated in accordance with the following formula (C2) is from 0.85 to 1.20:

$$\text{Relative refrigerating capacity } (RQ_{R134a}) = \frac{\text{Refrigerating capacity of sample } (Q_{sample})}{\text{Refrigerating capacity of R134a } (Q_{R134a})} \quad (B2)$$

$$\text{Relative coefficient of performance } (RCOP_{R134a}) = \frac{\text{Coefficient of performance of sample } (COP_{sample})}{\text{Coefficient of performance of R134a } (COP_{R134a})} \quad (C2)$$

wherein R134a is 1,1,1,2-tetrafluoroethane, and the sample is the working fluid to be subjected to relative evaluation; and the refrigerating capacity and the coefficient of performance of each of the sample and R134a are respectively an output (kW), and a value obtained by dividing the output (kW) by the required power consumption (kW), when each of the sample and R134a is applied to a standard refrigerating cycle under conditions such that the evaporation temperature is 0°C (in the case of a non-azeotropic mixture, the average temperature of the evaporation initiation temperature and the evaporation completion temperature), the condensing temperature is 40°C (in the case of a non-azeotropic mixture, the average temperature of the condensation initiation temperature and the condensation completion temperature), the supercooling degree (SC) is 5°C, and the degree of superheat (SH) is 5°C.

[8] The working fluid for heat cycle according to any one of [1] to [7], wherein the saturated hydrofluorocarbon is at least one member selected from difluoromethane, 1,1-difluoromethane, 1,1,1,2-tetrafluoroethane and pentafluoroethane.

[9] The working fluid for heat cycle according to any one of [1] to [8], wherein the hydrofluorocarbon having a carbon-carbon double bond is at least one member selected from 1,3,3,3-tetrafluoroproperie and 2,3,3,3-tetrafluoropropene.

[10] A composition for a heat cycle system, which comprises the working fluid for heat cycle as defined in any one of [1] to [9], and a refrigerant oil.

[11] A heat cycle system, which employs the composition for a heat cycle system as defined in [10].

[12] The heat cycle system according to [11], which is a refrigerating apparatus, an air-conditioning apparatus, a power generation system, a heat transport apparatus or a secondary cooling machine.

[13] The heat cycle system according to [12], which is a room air-conditioner, a store package air-conditioner, a building package air-conditioner, a plant package air-conditioner, a gas engine heat pump, a train air-conditioning system, an automobile air-conditioning system, a built-in showcase, a separate showcase, an industrial fridge freezer, an ice making machine or a vending machine.

ADVANTAGEOUS EFFECTS OF INVENTION

According to the present invention, it is possible to provide a working fluid for heat cycle containing HFO-1132, which has high stability, and which has cycle performance sufficient as an alternative to R410A or HFC-134a while the influence over global warming is suppressed, and a composition for a heat cycle system comprising it.

The heat cycle system of the present invention is a heat cycle system which employs a composition for a heat cycle system which can replace R410A or HFC-134a and which has less influence over global warming.

BRIEF DESCRIPTION OF DRAWINGS

Fig. 1 is a schematic construction view illustrating an example of a standard refrigerating cycle system to evaluate the heat cycle system of the present invention.

Fig. 2 is a cycle diagram illustrating the state change of a working fluid in a refrigerating cycle system in Fig. 1 on a pressure-enthalpy diagram.

DESCRIPTION OF EMBODIMENTS

Now, the present invention will be described in detail.

[Working fluid for heat cycle]

The working fluid for heat cycle of the present invention (hereinafter sometimes referred to simply as "working fluid") contains at least two members selected from a saturated hydrofluorocarbon and a hydrofluorocarbon having a carbon-carbon double bond other than HFO-1132, and HFO-1132.

The working fluid for heat cycle of the present invention contains at least two members selected from a HFC which has less influence over the ozone layer and a HFO having less influence over the ozone layer and having low GWP, and HFO-1132 having excellent cycle performance and having less influence over the global warming, in combination, whereby it is a working fluid of which the influence over global warming and the cycle performance are controlled in a balanced manner, and which can be used as an alternative to R410A, HFC-134a, etc.

Further, HFO-1132, which has a carbon-carbon double bond as mentioned above, is easily decomposed and has less influence over global warming. Further, it has cycle performance excellent as a working fluid, however, when it is used alone, since it has a carbon-carbon double bond, its stability is of concern in some cases. From such a viewpoint also, the constitution of the above working fluid of the present invention containing at least two members among a HFO other than HFO-1132 and a HFC, and HFO-1132 in combination, is useful.

Specifically, as shown in the after-mentioned Examples, HFO-1132 is confirmed to undergo self-decomposition reaction at high temperature or with an ignition source under high pressure. Further, it was confirmed that the self-decomposition reaction is suppressed by mixing HFO-1132 with another component to form a mixture having a lowered content of HFO-1132. Although it is possible to suppress the self-decomposition reaction by controlling temperature conditions or pressure conditions, it is advantageous to adjust the content of HFO-1132 in the working fluid in view of workability when the working fluid is employed for a heat cycle system.

From such a viewpoint, the working fluid of the present invention contains at least two members selected from a HFC and a HFO, and HFO-1132 in combination, and the content of HFO-1132 is specifically preferably at most 80 mass% based on the entire amount of the working fluid.

As HFO-1132, there are stereoisomers of cis-form (hereinafter referred to as Z-form) and trans-form (hereinafter referred to as E-form) which have significantly different boiling points, that is, which can easily be separated and purified. There is no difference in the above self-decomposition reaction property (hereinafter sometimes referred to as "self-decomposition property") between Z-form and E-form of HFO-1132 and a mixture thereof. In a case where it is not particularly necessary to distinguish Z-form and E-form of HFO-1132 and a mixture thereof, in this specification, "HFO-1132" is generally meant for Z-form, E-form and a mixture thereof. Further, in this specification, in a case where it is necessary to distinguish Z-form and E-form of HFO-1132 and a mixture thereof, e.g. in a case where there are a difference in the physical properties between them, Z-form and E-form of HFO-1132 will be referred to as HFO-1132(Z) and HFO-1132(E), respectively.

When a preferred composition is to be selected for the working fluid of the present invention containing at least two members selected from a HFC and a HFO, and HFO-1132 in combination, the following indices are preferably employed apart from the above self-decomposition reaction property.

As one of indices when a working fluid which is a mixture of a plurality of compounds, such as the working fluid of the present invention, is employed for a predetermined heat cycle, (A) the temperature glide may be mentioned. The temperature glide is an index to a difference in the composition between a liquid phase and in a gaseous phase. The temperature glide of a working fluid consisting of a single compound is zero.

Here, when the working fluid is applied to a predetermined heat cycle, usually, the cycle performance is employed as an index. The cycle performance is evaluate by (B) the capacity (also referred to as "Q" in this specification) and (C) the coefficient of performance (also referred to as "COP" in this specification). In a case where the heat cycle system is a refrigerating cycle system, the capacity is refrigerating capacity.

In the present invention, the performance of the working fluid is evaluated with reference to the above three items as indices. Specifically, a standard refrigerating cycle under the following temperature conditions is conducted, the respective items are measured, for example, by the after-mentioned methods. The cycle performance is evaluated as calculated into a relative value based on the value of R410A or HFC-134a to be replaced. Now, the following items to be evaluated will be described in detail.

(Temperature conditions for standard refrigerating cycle)

Evaporation temperature: 0°C (in the case of a non-azeotropic mixture, the average temperature of the evaporation initiation temperature and the evaporation completion temperature)
Condensing temperature: 40°C (in the case of a non-azeotropic mixture, the average temperature of the condensation initiation temperature and the condensation completion temperature)
Supercooling degree (SC): 5°C
Degree of superheat (SH): 5°C

(A) Temperature glide

The temperature glide is an index to a difference in the composition between in a liquid phase and in a gaseous phase of particularly a mixture as the working fluid. The temperature glide is defined as properties such that the initiation temperature and the completion temperature of evaporation in an evaporator or of condensation in a condenser, for example, as the heat exchanger, differ from each other. The temperature glide of an azeotropic mixture fluid is 0, and the temperature glide of a pseudoazeotropic mixture such as R410A is extremely close to 0.

If the temperature glide is large, for example, the inlet temperature of an evaporator tends to be low, and frosting is likely to occur. Further, in a heat cycle system, the heat exchange efficiency is to be improved by making the working fluid and the heat source fluid such as water or the air flowing in heat exchangers flow in countercurrent flow. Since the temperature difference of the heat source fluid is small in a stable operation state, it is difficult to obtain a heat cycle system with a good energy efficiency with a non-azeotropic mixture fluid with a large temperature glide. Accordingly, in a case where a mixture is used as the working fluid, a working fluid with an appropriate temperature glide is desired.

Further, when a non-azeotropic mixture fluid is put into a refrigerator or an air-conditioning apparatus from a pressure container, it undergoes a composition change. Further, if a refrigerant leaks out from a refrigerator or an air-conditioning apparatus, the refrigerant composition in the refrigerator or the air-conditioning apparatus is very likely to change, and a recovery to an initial refrigerant composition is hardly possible. Whereas, the above problems can be avoided with an azeotropic or pseudoazeotropic mixture fluid.

(B) Relative refrigerating capacity

The refrigerating capacity is an output in the refrigerating cycle system. The relative refrigerating capacity based on R410A may be obtained in accordance with the following formula (B1). The relative refrigerating capacity based on HFC-134a may be obtained in accordance with the following formula (B2). In the formulae (B1) and (B2), the sample is the working fluid to be subjected to relative evaluation. Hereinafter, the relative refrigerating capacities based on R410A and HFC-134a will sometimes be referred to as (B1) $RQ_{R410A}$ and (B2) $RQ_{R134a}$, or simply as $RQ_{R410A}$ and $RQ_{R134a}$.

$$\text{Relative refrigerating capacity } (RQ_{R410A}) = \frac{\text{Refrigerating capacity of sample } (Q_{sample})}{\text{Refrigerating capacity of R410A } (Q_{R410A})} \quad (B1)$$

$$\text{Relative refrigerating capacity } (RQ_{R134a}) = \frac{\text{Refrigerating capacity of sample } (Q_{sample})}{\text{Refrigerating capacity of R134a } (Q_{R134a})} \quad (B2)$$

(C) Relative coefficient of performance

The coefficient of performance is a value obtained by dividing an output (kW) by the power (kW) consumed to obtain the output (kW) and corresponds to the energy consumption efficiency. A higher output will be obtained with a low input when the coefficient of performance is higher. The relative coefficient of performance based on R410A may be obtained in accordance with the following formula (C1). The relative coefficient of performance based on HFC-134a may be obtained in accordance with the following formula (C2). In the formulae (C1) and (C2), the sample is a working fluid to be subjected to relative evaluation. Hereinafter, the relative coefficients of performance based on R410A and HFC-134a will sometimes be referred to as (C1) $RCOP_{R410A}$ and (C2) $RCOP_{R134a}$, or simply as $RCOP_{R410A}$ and $RCOP_{R134a}$.

$$\text{Relative coefficient of performance } (RCOP_{R410A}) = \frac{\text{Coefficient of performance of sample } (COP_{sample})}{\text{Coefficient of performance of R410A } (COP_{R410A})} \quad (C1)$$

$$\text{Relative coefficient of performance } (RCOP_{R134a}) = \frac{\text{Coefficient of performance of sample } (COP_{sample})}{\text{Coefficient of performance of R134a } (COP_{R134a})} \quad (C2)$$

The above (B) relative refrigerating capacity and (C) relative coefficient of performance are evaluated by the combination with $RQ_{R410A}$ and $RCOP_{R410A}$ as represented by the formulae (B1) and (C1), respectively, in a case where the working fluid is to be used as an alternative to R410A. Likewise, in a case where the working fluid is to be used as an alternative to HFC-134a, they are evaluated by the combination with $RQ_{R134a}$ and $RCOP_{R134a}$ represented by the formulae (B2) and (C2), respectively.

Further, in the present invention, as an index to the influence of the working fluid over global warming, (D) global warming potential (GWP) is employed. In this specification, GWP is a global warming potential (100 years) in Intergovernmental Panel on Climate Change (IPCC), Fourth assessment report, unless otherwise specified. Further, GWP of a mixture is represented by a weighted average by the composition mass.

The global warming potential (100 years) of HFO-1132 contained in the working fluid of the present invention is not disclosed in IPCC, Fourth assessment report. However, GWPs of HFO-1132(Z) and HFO-1132(E) are estimated to be at most 10 from GWPs of other HFOs, for example, GWP of HFO-1234ze of 6 and GWP of HFO-1234yf of 4.

R410A (a composition of HFC-125 and HFC-32 in a mass ratio of 1:1) excellent in the cycle performance, which is to be replaced by the working fluid of the present invention, has very high GWP of 2,088, and HFC-134a has GWP of 1,430. With respect to the respective HFCs contained in R410A, HFC-125 has GWP of 3,500 and HFC-32 has GWP of 675.

In Table 1, of HFO-1132(Z) and HFO-1132(E), the relative coefficient of performance ($RCOP_{R410A}$) and the relative refrigerating capacity ($RQ_{R410A}$) based on R410A and the relative coefficient of performance ($RCOP_{R134a}$) and the relative refrigerating capacity ($RQ_{R134a}$) based on HFC-134a are shown together with GWPs.

[Table 1]

| Compound | Based on R410A | | Based on HFC-134a | | GWP |
|---|---|---|---|---|---|
| | $RCOP_{R410A}$ | $RQ_{R410A}$ | $RCOP_{R134a}$ | $RQ_{R134a}$ | |
| HFO-1132(Z) | 1.12 | 0.46 | 1.03 | 1.04 | At most 10 |
| HFO-1132(E) | 1.03 | 0.89 | 0.95 | 2.00 | At most 10 |
| R410A | 1.00 | 1.00 | - | - | 2,088 |
| HFC-134a | - | - | 1.00 | 1.00 | 1,430 |

Although HFO-1132(Z) when used alone has low GWP and cycle performance higher than HFC-134a, the mixed composition of the present invention has superiority from the viewpoint of high stability as mentioned above. HFO-1132(E) when used alone as an alternative to R410a is insufficient in the relative refrigerating capacity ($RQ_{R410A}$), however, improvement of the relative refrigerating capacity by the mixed composition of the present invention is expected. Further, in such a case also, the mixed composition of the present invention has superiority from the viewpoint of high stability.

In Table 1, the cycle performance and GWP of HFO-1132(Z) and HFO-1132(E) are respectively shown. With respect to a mixture thereof, each relative value is present within a range of values of HFO-1132(Z) and HFO-1132(E) respectively as an upper limit value or a lower limit value. The mixed composition of the present invention is confirmed to have superiority also over such a mixture of HFO-1132(Z) and HFO-1132(E).

However, as mentioned above, there is a significant difference in the boiling point between HFO-1132(Z) and HFO-1132(E). Accordingly, from the viewpoint of the following (A) temperature glide, the working fluid of the present invention is preferably used in such a manner that either one of HFO-1132(Z) and HFO-1132(E) is mainly contained, for example, HFO-1132(Z) or HFO-1132(E) is contained in an amount of at least 80 mass% based on the total amount of HFO-1132(Z) and HFO-1132(E), rather than in the form of a mixture containing both respectively in significant amounts.

The working fluid of the present invention is a mixture of at least three members of a HFO and a HFC containing HFO-1132 as an essential component and has a temperature glide. Of the working fluid of the present invention, (A) the temperature glide which is an index to the degree of the composition change is preferably at most 8°C, more preferably at most 5°C, further preferably at most 3°C, particularly preferably at most 1°C.

The working fluid of the present invention preferably has cycle performance sufficient as an alternative to R410A and/or HFC-134a. From such a viewpoint, of the working fluid of the present invention, the working fluid of the present invention is preferably such that (B1) $RQ_{R410A}$ as (B) the relative refrigerating capacity is from 0.70 to 1.60, and (C1) $RCOP_{R410A}$ as (C) the relative coefficient of performance is from 0.85 to 1.20. When (B1) $RQ_{R410A}$ and (C1) $RCOP_{R410A}$ are within the above ranges, the working fluid of the present invention is sufficient as an alternative to R410A. (B1) $RQ_{R410A}$ is more preferably from 0.90 to 1.50, particularly preferably from 1.00 to 1.50. (C1) $RCOP_{R410A}$ is more preferably from 0.90 to 1.20, particularly preferably from 0.95 to 1.20.

Otherwise, the working fluid of the present invention is preferably such that (B2) $RQ_{R134a}$ as (B) the relative refrigerating capacity is from 0.70 to 1.60 and (C2) $RCOP_{R134a}$ as (C) the relative coefficient of performance is from 0.85 to 1.20. When (B2) $RQ_{R134a}$ and (C2) $RCOP_{R134a}$ are within the above ranges, the working fluid of the present invention is sufficient as an alternative to HFC-134a. (B2) $RQ_{R134a}$ is more preferably from 0.90 to 1.50, particularly preferably from 1.00 to 1.50. (C2) RCOP$_{R134a}$ is more preferably from 0.90 to 1.20, particularly preferably from 0.95 to 1.20.

Further, when (B1) RQ$_{R410A}$ is from 0.70 to 1.60 and (C1) RCOP$_{R410A}$ is from 0.85 to 1.20, and (B2) RQ$_{R134a}$ is from 0.70 to 1.60 and (C2) RCOP$_{R134a}$ is from 0.85 to 1.20, such a working fluid of the present invention is sufficient as an alternative to R410A and HFC-134a.

(D) GWP of the working fluid of the present invention is preferably less than 1,500, more preferably less than 1,000, further preferably less than 750, particularly preferably less than 500, as a calculated value estimating GWP of HFO-1132 to be 10 with respect to both HFO-1132(Z) and HFO-1132(E).

The relation of preferred ranges of the items (A) to (D) is shown in Table 2. In Table 2, with respect to each item, the preferred condition range is limited in the order of (1) → (2) → (3) → (4). (4) Represents the most preferred range. The values in "(D) GWP" in Table 2 are based on calculated values assuming that GWPs of HFO-1132(Z) and HFO-1132(E) are respectively 10.

[Table 2]

| Physical properties/condition | | (1) | (2) | (3) | (4) |
|---|---|---|---|---|---|
| (A) Temperature glide [°C] | | $\leqq 8$ | $\leqq 5$ | $\leqq 3$ | $\leqq 1$ |
| Based on R410A | (B1) RQ$_{R410A}$ | 0.70 to 1.60 | 0.90 to 1.50 | 1.00 to 1.50 | - |
| | (C1) RCOP$_{R410A}$ | 0.85 to 1.20 | 0.90 to 1.20 | 0.95 to 1.20 | - |
| Based on HFC-134a | (B2) RQ$_{R134a}$ | 0.70 to 1.60 | 0.90 to 1.50 | 1.00 to 1.50 | - |
| | (C2) RCOP$_{R134a}$ | 0.85 to 1.20 | 0.90 to 1.20 | 0.95 to 1.20 | - |
| (D) GWP | | <1,500 | <1,000 | <750 | <500 |

The working fluid of the present invention is a mixture of at least three compounds selected from a HFO including HFO-1132 and a HFC (provided that HFO-1132 is an essential component), and it preferably satisfies the condition (A)-(1) in Table 2 first. Further, in addition to satisfying the condition (A)-(1), it preferably satisfies conditions (B1)-(1) and (C1)-(1) and/or (B2)-(1) and (C2)-(1). In a case where the condition of the physical properties of the working fluid is selected from Table 2, (B1) and (C1) as the cycle performance based on R410A are selected usually in combination. Independently, (B2) and (C2) as the cycle performance based on HFC-134a are selected usually in combination.

Except for the above condition, the combination of the levels of the respective items is not particularly limited. In the present invention, most preferred is a working fluid which satisfies all the conditions of (A)-(4), (B1)-(3), (C1)-(3) and (D)-(4) or a working fluid which satisfies all the conditions of (A)-(4), (B2)-(3), (C2)-(3) and (D)-(4).

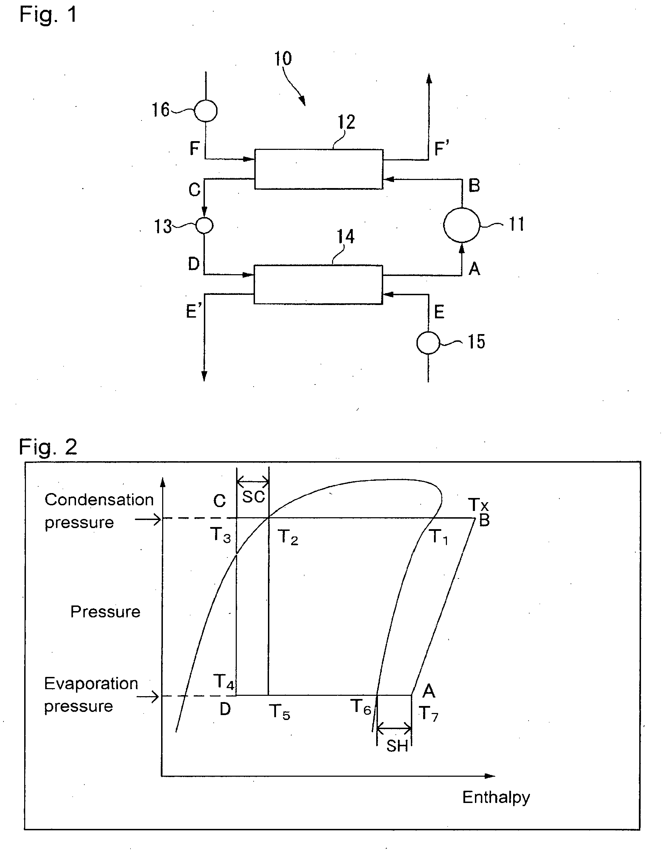

As the refrigerating cycle system employed for the above evaluation, for example, a refrigerating cycle system of which the schematic construction view is shown in Fig. 1, may be used. Now, the method for evaluating the cycle performance and the temperature glide employing the refrigerating cycle system shown in Fig. 1 will be described.

A refrigerating cycle system 10 shown in Fig. 1 is a system generally comprising a compressor 11 to compress a working fluid vapor A to form a high temperature/high pressure working fluid vapor B, a condenser 12 to cool and liquefy the working fluid vapor B discharged from the compressor 11 to form a low temperature/high pressure working fluid C, an expansion valve 13 to let the working fluid C discharged from the condenser 12 expand to form a low temperature/low pressure working fluid D, an evaporator 14 to heat the working fluid D discharged from the expansion valve 13 to form a high temperature/low pressure working fluid vapor A, a pump 15 to supply a load fluid E to the evaporator 14, and a pump 16 to supply a fluid F to the condenser 12.

In the refrigerating cycle system 10, a cycle of the following (i) to (iv) is repeated.

(i) A working fluid vapor A discharged from an evaporator 14 is compressed by a compressor 11 to form a high temperature/high pressure working fluid vapor B (hereinafter referred to as "AB process").

(ii) The working fluid vapor B discharged from the compressor 11 is cooled and liquefied by a fluid F in a condenser 12 to form a low temperature/high pressure working fluid C. At that time, the fluid F is heated to form a fluid F', which is discharged from the condenser 12 (hereinafter referred to as "BC process").

(iii) The working fluid C discharged from the condenser 12 is expanded in an expansion valve 13 to form a low temperature/low pressure working fluid D (hereinafter referred to as "CD process").

(iv) The working fluid D discharged from the expansion valve 13 is heated by a load fluid E in the evaporator 14 to form a high temperature/low pressure working fluid vapor A. At that time, the load fluid E is cooled and becomes a load fluid E', which is discharged from the evaporator 14 (hereinafter referred to as "DA process").

The refrigerating cycle system 10 is a cycle system comprising an adiabatic isentropic change, an isenthalpic change and an isobaric change. The state change of the working fluid, as represented on a pressure-enthalpy diagram (curve) as shown in Fig. 2, may be represented as a trapezoid having points A, B, C and D as vertexes.

The AB process is a process wherein adiabatic compression is carried out by the compressor 11 to change the high temperature/low pressure working fluid vapor A to a high temperature/high pressure working fluid vapor B, and is represented by the line AB in Fig. 2. As described hereinafter, the working fluid vapor A is introduced to the compressor 11 in a superheated state, and the obtainable working fluid vapor B is also a superheated vapor. The compressor discharge gas temperature (discharge temperature) is the temperature (Tx) in the state B in Fig. 2 and is the maximum temperature in the refrigerating cycle.

Further, the composition of the working fluid may be prepared by further employing as an index a difference in the discharge temperature between in a case where the working fluid to be replaced, R410A or HFC-134a is used and in a case where the working fluid of the present invention is used. In such a case, the discharge temperature in a case where the working fluid of the present invention is used is preferably lower than the discharge temperature in a case where the working fluid to be replaced, R410A or HFC-134a is used, or even if higher, the difference is preferably at most 30°C, more preferably at most 20°C, particularly preferably at most 10°C.

The BC process is a process wherein isobaric cooling is carried out in the condenser 12 to change the high temperature/high pressure working fluid vapor B to a low temperature/high pressure working fluid C and is represented by the BC line in Fig. 2. The pressure in this process is the condensation pressure. Of the two intersection points of the pressure-enthalpy diagram and the BC line, the intersection point $T_1$ on the high enthalpy side is the condensing temperature, and the intersection point $T_2$ on the low enthalpy side is the condensation boiling point temperature. In a case where the working fluid is a non-azeotropic mixture fluid, the temperature glide is represented by a difference between $T_1$ and $T_2$.

The CD process is a process wherein isenthalpic expansion is carried out by the expansion valve 13 to change the low temperature/high pressure working fluid C to a low temperature/low pressure working fluid D and is presented by the CD line in Fig. 2. $T_2$-$T_3$ corresponds to the supercooling degree (SC) of the working fluid in the cycle of (i) to (iv), where $T_3$ is the temperature of the low temperature/high pressure working fluid C.

The DA process is a process wherein isobaric heating is carried out in the evaporator 14 to have the low temperature/low pressure working fluid D returned to a high temperature/low pressure working fluid vapor A, and is represented by the DA line in Fig. 2. The pressure in this process is the evaporation pressure. Of the two intersection points of the pressure-enthalpy diagram and the DA line, the intersection point $T_6$ on the high enthalpy side is the evaporation temperature. $T_7$-$T_6$ corresponds to the degree of superheat (SH) of the working fluid in the cycle of (i) to (iv), where $T_7$ is the temperature of the working fluid vapor A. $T_4$ indicates the temperature of the working fluid D.

Q and COP of the working fluid are obtained respectively in accordance with the following formulae (11) and (12) from enthalpies $h_A$, $h_B$, $h_C$ and $h_D$ in the respective states A (after evaporation, high temperature and low pressure), B (after compression, high temperature and high pressure), C (after condensation, low temperature and high pressure) and D (after expansion, low temperature and low pressure) of the working fluid.

It is assumed that there is no loss in the equipment efficiency and no pressure loss in the pipelines and heat exchangers.

The thermodynamic properties required for calculation of the cycle performance of the working fluid are calculated based on the generalized equation of state (Soave-Redlich-Kwong equation) based on the law of corresponding state and various thermodynamic equations. If a characteristic value is not available, it is calculated employing an estimation technique based on a group contribution method.

$$Q = h_A - h_D \quad (11)$$

$$COP = Q/\text{compression work} = (h_A - h_D)/(h_B - h_A) \quad (12)$$

Q represented by the above $(h_A - h_D)$ corresponds to the output (kW) of the refrigerating cycle, and the compression work represented by $(h_B - h_A)$, for example, an electric energy required to operate a compressor, corresponds to the power (kW) consumed. Further, Q means a capacity to freeze a load fluid, and a higher Q means that more works can be done in the same system. In other words, it means that with a working fluid having a higher Q, the desired performance can be obtained with a smaller amount, whereby the system can be downsized.

<Specific composition of working fluid>

The working fluid of the present invention preferably has a content of HFO-1132 of at most 80 mass% based on the entire amount of the working fluid, as mentioned above, with a view to suppressing self-decomposition property of HFO-1132. From this viewpoint, at least two members selected from a HFC and a HFO other than HFO-1132, to be used together with HFO-1132, are not particularly limited. However, preferably, at least two members selected from a HFC and a HFO other than HFO-1132 are compounds having no self-decomposition property.

More preferably, in combination with HFO-1132, more preferably in combination with HFO-1132 in a content of at most 80 mass%, at least two members selected from a HFC and a HFO other than HFO-1132 which can satisfy the above physical properties such as the temperature glide, the cycle performance and GWP are selected.

The content of HFO-1132 based on the entire amount of the working fluid is preferably at least 20 mass% in view of the cycle performance and GWP, more preferably 40 mass%. Further, for higher stability of the working fluid, in other words, for durability, the content of HFO-1132 based on the entire amount of the working fluid is preferably at most 80 mass%.

Further, as mentioned above, from the viewpoint of (A) the temperature glide, the working fluid of the present invention contains HFO-1132 preferably in such a manner that either one of HFO-1132(Z) and HFO-1132(E) is mainly contained, for example, HFO-1132(Z) or HFO-1132(E) is contained in an amount of at least 80 mass%, preferably at least 90 mass% based on the total amount of HFO-1132(Z) and HFO-1132(E), rather than in the form of a mixture containing HFO-1132(Z) and HFO-1132(E) respectively in substantial amounts.

Now, the HFC and the HFO other than HFO-1132 which the working fluid of the present invention may contain will be specifically described.

(HFC)

The HFC to be combined with HFO-1132 is selected properly with a view to improving the cycle performance as the working fluid and keeping the temperature glide to be within an appropriate range and in addition, with a view to keeping GWP to be within the above range, and in that HFC has no self-decomposition property.

The HFC which has less influence over the ozone layer and which has less influence over global warming may be specifically a $C_{1-5}$ HFC. The HFC may be linear, branched or cyclic.

The HFC may, for example, be HFC-32, difluoroethane, trifluoroethane, tetrafluoroethane, HFC-125, pentafluoropropane, hexafluoropropane, heptafluoropropane, pentafluorobutane or heptafluorocyclopentane.

Among them, in view of less influence over the ozone layer, excellent refrigerating cycle property and no self-decomposition property, the HFC is preferably HFC-32, 1,1-difluoroethane (HFC-152a), 1,1,1-trifluoroethane (HFC-143a), 1,1,2,2-tetrafluoroethane (HFC-134), HFC-134a or HFC-125, more preferably HFC-32, HFC-152a, HFC-134a or HFC-125.

The HFC may be used alone or in combination of two or more. In a case where HFC is used alone, at least one member is selected from the following HFOs other than HFO-1132.

From the viewpoint of the temperature glide of the working fluid to be obtained, HFO-1132 is used in such a manner that either one of HFO-1132(Z) and HFO-1132(E) is mainly contained. In such a case, the HFC to be used is preferably at least one member of a HFC having a composition to form an azeotropic mixture with HFO-1132 which the working fluid mainly contains.

In a case where HFO-1132(Z) is mainly contained as HFO-1132, the HFC to be combined is preferably HFC-134a capable of forming a pseudoazeotropic mixture close to an azeotropic mixture with HFO-1132(Z) in a composition range of from 99:1 to 1:99 by the mass ratio.

Further, in a case where HFO-1132(E) is mainly contained as HFO-1132, the HFC to be combined is preferably at least one member selected from HFC-32 and HFC-125, capable of forming a pseudoazeotropic mixture close to an azeotropic mixture with HFO-1132(E) within a composition range of from 99:1 to 1:99 by the mass ratio.

(HFO other than HFO-1132)

The HFO other than HFO-1132 is also preferably selected from the same viewpoint as the above HFC. Here, GWP of the HFO even other than HFO-1132 is an order of magnitude lower than the HFC. Accordingly, as the HFO other than HFO-1132 used in combination with HFO-1132 is preferably selected properly particularly with a view to improving the cycle performance as the working fluid and keeping the temperature glide to be within an appropriate range, and in that HFO has no self-decomposition property, rather than considering GWP.

The HFO other than HFO-1132 may, for example, be 2,3,3,3-tetrafluoropropene (HFO-1234yf), 2-fluoropropene (HFO-1261yf), 1,1,2-trifluoropropene (HFO-1243yc), trans-1,2,3,3,3-pentafluoropropene (HFO-1225ye(E)), cis-1,2,3,3,3-pentafluoropropene (HFO-1225ye(Z)), trans-1,3,3,3-tetrafluoropropene (HFO-1234ze(E)), cis-1,3,3,3-tetrafluoropropene (HFO-1234ze(Z)) or 3,3,3-trifluoropropene (HFO-1243zf).

Particularly, the HFO other than HFO-1132 is, in view of a high critical temperature, no self-decomposition property and excellent coefficient of performance, preferably HFO-1234yf, HFO-1234ze(E) or HFO-1234ze(Z), more preferably HFO-1234yf. The HFO other than HFO-1132 may be used alone or in combination of two or more. In a case where the HFO other than HFO-1132 is used alone, at least one member is selected from the above HFCs.

In the same manner as above, from the viewpoint of the temperature glide, in a case where HFO-1132(Z) is mainly contained as HFO-1132, the HFO other than HFO-1132 to be combined is preferably HFO-1234yf capable of forming a pseudoazeotropic mixture close to an azeotropic mixture with HFO-1132(Z) within a composition range of from 99:1 to 1:99 by the mass ratio.

In the working fluid of the present invention, the number of compounds selected from the HFC and the HFO other than HFO-1132 used in combination with HFO-1132 is not particularly limited so long as it is at least two. The number of the compounds is preferably at most 4 from the viewpoint of workability when the working fluid is produced, more preferably 2 or 3, particularly preferably 2.

With respect to the preferred combination of the two members selected from the HFC and the HFO other than HFO-1132, and HFO-1132, in the working fluid of the present invention, at least one of the two members selected from the HFC and the HFO other than HFO-1132 is preferably a compound capable of forming a pseudoazeotropic mixture with the main component of HFO-1132 contained. Both the two members selected from the HFC and the HFO other than HFO-1132 may be compounds capable of forming a pseudoazeotropic mixture with the main component of HFO-1132 contained, or only one member may be such a compound. In either case, the components to be contained are selected considering the balance of preferred ranges of the above indices (A) to (D) of the working fluid.

As a preferred combination of the two members selected from the HFC and the HFO other than HFO-1132, and HFO-1132, in the working fluid of the present invention, specifically, the following combination may be mentioned.

In a case where HFO-1132(Z) is mainly contained as HFO-1132, a combination of HFO-1234yf or HFC-134a, one member selected from HFC-32, HFC-125 and HFO-1234ze(E), and the HFO-1132.

In a case where HFO-1132(E) is mainly contained as HFO-1132, a combination of HFC-32 or HFC-125, one member selected from HFC-134a, HFO-1234yf and HFO-1234ze(E), and the HFO-1132.

Further, as a particularly preferred combination of the two members selected from the HFC and the HFO other than HFO-1132, and HFO-1132, in the working fluid of the present invention, the following combination may be mentioned.

A combination of HFO-1234yf, HFC-134a and HFO-1132(Z).

A combination of HFC-134a, HFO-1234ze(E) and HFO-1132(Z).

A combination of HFC-32, HFC-134a and HFO-1132(E).

A combination of HFC-125, HFC-32 and HFO-1132(E).

(Optional component)

The working fluid of the present invention may contain, other than the above HFO-1132 and two members selected from a HFC and a HFO other than HFO-1132, as an optional component, carbon dioxide, a hydrocarbon, a chlorofluoroolefin (CFO), a hydrochlorofluoroolefin (HCFO) or the like. Such an optional component is preferably a component which has less influence over the ozone layer, which has less influence over global warming and which has no self-decomposition property.

The hydrocarbon may, for example, be propane, propylene, cyclopropane, butane, isobutane, pentane or isopentane.

The hydrocarbon may be used alone or in combination of two or more.

In a case where the working fluid contains a hydrocarbon, its content is less than 10 mass%, preferably from 1 to 5 mass%, more preferably from 3 to 5 mass% per 100 mass% of the working fluid. When the content of the hydrocarbon is at least the lower limit, the solubility of a mineral refrigerant oil in the working fluid will be more favorable.

The CFO may, for example, be chlorofluoropropene or chlorofluoroethylene. With a view to suppressing flammability of the working fluid without significantly decreasing the cycle performance of the working fluid, the CFO is preferably 1,1-dichloro-2,3,3,3-tetrafluoropropene (CFO-1214ya), 1,3-dichloro-1,2,3,3-tetrafluoropropene (CFO-1214yb) or 1,2-dichloro-1,2-difluoroethylene (CFO-1112).

The CFO may be used alone or in combination of two or more.

In a case where the working fluid contains the CFO, its content is less than 10 mass%, preferably from 1 to 8 mass%, more preferably from 2 to 5 mass% per 100 mass% of the working fluid. When the content of the CFO is at least the lower limit, the flammability of the working fluid tends to be suppressed. When the content of the CFO is at most the upper limit, favorable cycle performance is likely to be obtained.

The HCFO may, for example, be hydrochlorofluoropropene or hydrochlorofluoroethylene. With a view to suppressing the flammability of the working fluid without significantly decreasing the cycle performance of the working fluid, the HCFO is preferably 1-chloro-2,3,3,3-tetrafluoropropene (HCFO-1224yd) or 1-chloro-1,2-difluoroethylene (HCFO-1122).

The HCFO may be used alone or in combination of two or more.

In a case where the working fluid contains the HCFO, the content of the HCFO per 100 mass% of the working fluid is less than 10 mass%, preferably from 1 to 8 mass%, more preferably from 2 to 5 mass%. When the content of the HCFO is at least the lower limit, the flammability of the working fluid tends to be suppressed. When the content of the HCFO is at most the upper limit, favorable cycle performance is likely to be obtained.

In a case where the working fluid of the present invention contains the above optional component, the total content of such optional component in the working fluid is less than 10 mass%, preferably at most 8 mass%, more preferably at most 5 mass% per 100 mass% of the working fluid.

[Composition for heat cycle system]

The working fluid of the present invention may be used, when applied to a heat cycle system, as the composition for a heat cycle system of the present invention usually as mixed with a refrigerant oil. The composition for a heat cycle system of the present invention, which comprises the working fluid of the present invention and a refrigerant oil, may further contain, in addition to the above components, known additives such as a stabilizer and a leak detecting substance.

<Refrigerant oil>

As a refrigerant oil, a known refrigerant oil which has been used for a composition for a heat cycle system together with a working fluid comprising a halogenated hydrocarbon may be used without any particular restrictions. The refrigerant oil may, for example, be specifically an oxygen-containing synthetic oil (such as an ester refrigerant oil or an ether refrigerant oil), a fluorinated refrigerant oil, a mineral refrigerant oil or a hydrocarbon synthetic oil.

The ester refrigerant oil may, for example, be a dibasic acid ester oil, a polyol ester oil, a complex ester oil or a polyol carbonate oil.

The dibasic acid ester oil is preferably an ester of a $C_{5-10}$ dibasic acid (such as glutaric acid, adipic acid, pimelic acid, suberic acid, azelaic acid or sebacic acid) with a $C_{1-15}$ monohydric alcohol which is linear or has a branched alkyl group (such as methanol, ethanol, propanol, butanol, pentanol, hexanol, heptanol, octanol, nonanol, decanol, undecanol, dodecanol, tridecanol, tetradecanol or pentadecanol). Specifically, ditridecyl glutarate, di(2-ethylhexyl) adipate, diisodecyl adipate, ditridecyl adipate or di(3-ethylhexyl) sebacate may, for example, be mentioned.

The polyol ester oil is preferably an ester of a diol (such as ethylene glycol, 1,3-propanediol, propylene glycol, 1,4-butanediol, 1,2-butandiol, 1,5-pentadiol, neopentyl glycol, 1,7-heptanediol or 1,12-dodecanediol) or a polyol having from 3 to 20 hydroxy groups (such as trimethylolethane, trimethylolpropane, trimethylolbutane, pentaerythritol, glycerin, sorbitol, sorbitan or a sorbitol/glycerin condensate) with a $C_{6-20}$ fatty acid (such as a linear or branched fatty acid such as hexanoic acid, heptanoic acid, octanoic acid, nonanoic acid, decanoic acid, undecanoic acid, dodecanoic acid, eicosanoic acid or oleic acid, or a so-called neo acid having a quaternary $\alpha$ carbon atom).

The polyol ester oil may have a free hydroxy group.

The polyol ester oil is preferably an ester (such as trimethylolpropane tripelargonate, pentaerythritol 2-ethylhexanoate or pentaerythritol tetrapelargonate) of a hindered alcohol (such as neopentyl glycol, trimethylolethane, trimethylolpropane, trimethylolbutane or pentaerythritol).

The complex ester oil is an ester of a fatty acid and a dibasic acid, with a monohydric alcohol and a polyol. The fatty acid, the dibasic acid, the monohydric alcohol and the polyol may be as defined above.

The polyol carbonate oil is an ester of carbonic acid with a polyol.

The polyol may be the above-described diol or the above-described polyol. Further, the polyol carbonate oil may be a ring-opening polymer of a cyclic alkylene carbonate.

The ether refrigerant oil may be a polyvinyl ether oil or a polyoxyalkylene oil.

The polyvinyl ether oil may, for example, be a polymer of a vinyl ether monomer, a copolymer of a vinyl ether monomer and a hydrocarbon monomer having an olefinic double bond, or a copolymer of a vinyl ether monomer and a vinyl ether monomer having a polyoxyalkylene chain.

The vinyl ether monomer is preferably an alkyl vinyl ether such as methyl vinyl ether of ethyl vinyl ether. Further, the vinyl ether monomer having a polyoxyalkylene chain may, for example, be a polyoxyalkylene diol having one of hydroxy groups alkyl-etherified and the other vinyl-etherified.

The vinyl ether monomer may be used alone or in combination of two or more.

The hydrocarbon monomer having an olefinic double bond may, for example, be ethylene, propylene, various forms of butene, various forms of pentene, various forms of hexene, various forms of heptene, various forms of octene, diisobutylene, triisobutylene, styrene, $\alpha$-methylstyrene or alkyl-substituted styrene. The hydrocarbon monomer having an olefinic double bond may be used alone or in combination of two or more.

The polyvinyl ether copolymer may be either of a block copolymer and a random copolymer. The polyvinyl ether oil may be used alone or in combination of two or more.

The polyoxyalkylene oil may, for example, be a polyoxyalkylene monool, a polyoxyalkylene polyol, an alkyl ether of a polyoxyalkylene monool or a polyoxyalkylene polyol, or an ester of a polyoxyalkylene monool or a polyoxyalkylene polyol.

The polyoxyalkylene monool or the polyoxyalkylene polyol may be one obtained by e.g. a method of subjecting a $C_{2-4}$ alkylene oxide (such as ethylene oxide or propylene oxide) to ring-opening addition polymerization to an initiator such as water or a hydroxy group-containing compound in the presence of a catalyst such as an alkali hydroxide. Further, one molecule of the polyoxyalkylene chain may contain single oxyalkylene units or two or more types of oxyalkylene units. It is preferred that at least oxypropylene units are contained in one molecule.

The initiator to be used for the reaction may, for example, be water, a monohydric alcohol such as methanol or butanol, or a polyhydric alcohol such as ethylene glycol, propylene glycol, pentaerythritol or glycerol.

The polyoxyalkylene oil is preferably an alkyl ether or ester of a polyoxyalkylene monool or polyoxyalkylene polyol. Further, the polyoxyalkylene polyol is preferably a polyoxyalkylene diol. The polyoxyalkylene oil is preferably one obtained by alkyl-etherifying all the hydroxy groups of a polyoxyalkylene monool or a polyoxyalkylene diol, which is called a polyalkylene glycol oil (PAG).

The fluorinated refrigerant oil may, for example, be a compound having hydrogen atoms of a synthetic oil (such as the after-mentioned mineral oil, poly-$\alpha$-olefin, alkylbenzene or alkylnaphthalene) substituted by fluorine atoms, a perfluoropolyether oil or a fluorinated silicone oil.

The mineral refrigerant oil may, for example, be a naphthenic mineral oil or a paraffinic mineral oil obtained by purifying a refrigerant oil fraction obtained by atmospheric distillation or vacuum distillation of crude oil by a purification treatment (such as solvent deasphalting, solvent extraction, hydrocracking, solvent dewaxing, catalytic dewaxing, hydrotreating or clay treatment) optionally in combination.

The hydrocarbon synthetic oil may, for example, be a poly-$\alpha$-olefin, an alkylbenzene or an alkylnaphthalene.

The refrigerant oil may be used alone or in combination of two or more.

The refrigerant oil is preferably at least one member selected from a polyol ester oil, a polyvinyl ether oil and a polyoxyalkylene oil in view of compatibility with the working fluid.

The content of the refrigerant oil in the composition for a heat cycle system is not limited within a range not to remarkably decrease the effects of the present invention, and is preferably from 10 to 100 parts by mass, more preferably from 20 to 50 parts by mass, per 100 parts by mass of the working fluid.

<Other optional component>

The stabilizer optionally contained in the composition for a heat cycle system is a component which improves the stability of the working fluid against heat and oxidation. As the stabilizer, a known stabilizer which has been used for a heat cycle system together with a working fluid comprising a halogenated hydrocarbon, for example, an oxidation resistance-improving agent, a heat resistance-improving agent or a metal deactivator, may be used without any particular restrictions.

The oxidation resistance-improving agent and the heat resistance-improving agent may, for example, be N,N'-diphenylphenylenediamine, p-octyldiphenylamine, p,p'-dioctyldiphenylamine, N-phenyl-1-naphthylamine, N-phenyl-2-naphthylamine, N-(p-dodecyl)phenyl-2-naphthylamine, di-1-naphthylamine, di-2-naphthylamine, N-alkylphenothiazine, 6-(t-butyl)phenol, 2,6-di-(t-butyl)phenol, 4-methyl-2,6-di-(t-butyl)phenol or 4,4'-methylenebis(2,6-di-t-butylphenol). Each of the oxidation resistance-improving agent and the heat resistance-improving agent may be used alone or in combination of two or more.

The metal deactivator may, for example, be imidazole, benzimidazole, 2-mercaptobenzothiazole, 2,5-dimercaptothiadiazole, salicylidene-propylenediamine, pyrazole, benzotriazole, tritriazole, 2-methylbenzamidazole, 3,5-dimethylpyrazole, methylenebis-benzotriazole, an organic acid or an ester thereof, a primary, secondary or tertiary aliphatic amine, an amine salt of an organic acid or inorganic acid, a heterocyclic nitrogen-containing compound, an amine salt of an alkyl phosphate, or a derivative thereof.

The content of the stabilizer in the composition for a heat cycle system is not limited within a range not to remarkably decrease the effects of the present invention, and is preferably at most 5 parts by mass, more preferably at most 1 part by mass per 100 parts by mass of the working fluid.

The leak detecting substance optionally contained in the composition for a heat cycle system may, for example, be an ultraviolet fluorescent dye, an odor gas or an odor masking agent.

The ultraviolet fluorescent dye may be known ultraviolet fluorescent dyes which have been used for a heat cycle system together with a working fluid comprising a halogenated hydrocarbon, such as dyes as disclosed in e.g. US Patent No. 4,249,412, JP-A-10-502737, JP-A-2007-511645, JP-A-2008-500437 and JP-A-2008-531836.

The odor masking agent may be known perfumes which have been used for a heat cycle system together with a working fluid comprising a halogenated hydrocarbon, such as perfumes as disclosed in e.g. JP-A-2008-500437 and JP-A-2008-531836.

In a case where the leak detecting substance is used, a solubilizing agent which improves the solubility of the leak detecting substance in the working fluid may be used.

The solubilizing agent may be ones as disclosed in e.g. JP-A-2007-511645, JP-A-2008-500437 and JP-A-2008-531836.

The content of the leak detecting substance in the composition for a heat cycle system is not particularly limited within a range not to remarkably decrease the effects of the present invention, and is preferably at most 2 parts by mass, more preferably at most 0.5 part by mass per 100 parts by mass of the working fluid.

[Heat cycle system]

The heat cycle system of the present invention is a system employing the composition for a heat cycle system of the present invention. As the heat cycle system, a heat cycle system by a heat exchanger such as a condenser or an evaporator may be used without any particular restriction. The heat cycle system of the present invention may specifically be a heat pump system utilizing heat obtained by a condenser or may be a refrigerating cycle system utilizing coldness obtained by an evaporator. The heat cycle system, for example, a refrigerating cycle system, has a mechanism in which a gaseous working fluid is compressed by a compressor and cooled by a condenser to form a high pressure liquid, the pressure of the liquid is lowered by an expansion valve, and the liquid is vaporized at low temperature by an evaporator so that heat is removed by the heat of vaporization.

The heat cycle system of the present invention may, for example, be specifically a refrigerating apparatus, an air-conditioning apparatus, a power generation system, a heat transfer apparatus and a secondary cooling machine. Among them, the heat cycle system of the present invention, which stably exhibits heat cycle performance in a working environment at higher temperature, is preferably employed as an air-conditioning apparatus to be disposed outdoors in many cases. Further, the heat cycle system of the present invention is preferably employed also for a refrigerating apparatus.

The air-conditioning apparatus may, for example, be specifically a room air-conditioner, a package air-conditioner (such as a store package air-conditioner, a building package air-conditioner or a plant package air-conditioner), a gas engine heat pump, a train air-conditioning system or an automobile air-conditioning system.

The refrigerating apparatus may, for example, be specifically a showcase (such as a built-in showcase or a separate showcase), an industrial fridge freezer, a vending machine or an ice making machine.

The power generation system is preferably a power generation system by Rankine cycle system.

The power generation system may, for example, be specifically a system wherein in an evaporator, a working fluid is heated by e.g. geothermal energy, solar heat or waste heat in a medium-to-high temperature range at a level of from 50 to 200°C, and the vaporized working fluid in a high temperature and high pressure state is adiabatically expanded by an expansion device, so that a power generator is driven by the work generated by the adiabatic expansion to carry out power generation.

Further, the heat cycle system of the present invention may be a heat transport apparatus. The heat transport apparatus is preferably a latent heat transport apparatus.

The latent heat transport apparatus may, for example, be a heat pipe conducting latent heat transport utilizing evaporation, boiling, condensation, etc. of a working fluid filled in an apparatus, and a two-phase closed thermosiphon. A heat pipe is applied to a relatively small-sized cooling apparatus such as a cooling apparatus of a heating portion of a semiconductor device and electronic equipment. A two-phase closed thermosiphon is widely used for a gas/gas heat exchanger, to accelerate snow melting and to prevent freezing of roads, since it does not require a wick and its structure is simple.

At the time of operation of the heat cycle system, in order to avoid drawbacks due to inclusion of moisture or inclusion of non-condensing gas such as oxygen, it is preferred to provide a means to suppress such inclusion.

If moisture is included in the heat cycle system, a problem may occur particularly when the heat cycle system is used at low temperature. For example, problems such as freezing in a capillary tube, hydrolysis of the working fluid or the refrigerant oil, deterioration of materials by an acid component formed in the cycle, formation of contaminants, etc. may arise. Particularly, if the refrigerant oil is a polyoxyalkylene oil or a polyol ester oil, it has extremely high moisture absorbing properties and is likely to undergo hydrolysis, and inclusion of moisture decreases properties of the refrigerant oil and may be a great cause to impair the long term reliability of a compressor. Accordingly, in order to suppress hydrolysis of the refrigerant oil, it is necessary to control the moisture concentration in the heat cycle system.

As a method of controlling the moisture concentration in the heat cycle system, a method of using a moisture-removing means such as a desiccating agent (such as silica gel, activated aluminum or zeolite) may be mentioned. The desiccating agent is preferably brought into contact with the composition for a heat cycle system in a liquid state, in view of the dehydration efficiency. For example, the desiccating agent is located at the outlet of the condenser 12 or at the inlet of the evaporator 14 to be brought into contact with the composition for a heat cycle system.

The desiccating agent is preferably a zeolite desiccating agent in view of chemical reactivity of the desiccating agent and the composition for a heat cycle system, and the moisture absorption capacity of the desiccating agent.

The zeolite desiccating agent is, in a case where a refrigerant oil having a large moisture absorption as compared with a conventional mineral refrigerant oil is used, preferably a zeolite desiccating agent containing a compound represented by the following formula (3) as the main component in view of excellent moisture absorption capacity.

$$M_{2/n}O \cdot Al_2O_3 \cdot xSiO_2 \cdot yH_2O \qquad (3)$$

wherein M is a group 1 element such as Na or K or a group 2 element such as Ca, n is the valence of M, and x and y are values determined by the crystal structure. The pore size can be adjusted by changing M.

To select the desiccating agent, the pore size and the fracture strength are important.

In a case where a desiccating agent having a pore size larger than the molecular size of the working fluid contained in the composition for a heat cycle system is used, the working fluid is adsorbed in the desiccating agent and as a result, chemical reaction between the working fluid and the desiccating agent will occur, thus leading to undesired phenomena such as formation of non-condensing gas, a decrease in the strength of the desiccating agent, and a decrease in the adsorption capacity.

Accordingly, it is preferred to use as the desiccating agent a zeolite desiccating agent having a small pore size. Particularly preferred is sodium/potassium type A synthetic zeolite having a pore size of at most 3.5 Å. By using a sodium/potassium type A synthetic zeolite having a pore size smaller than the molecular size of the working fluid, it is possible to selectively adsorb and remove only moisture in the heat cycle system without adsorbing the working fluid. In other words, the working fluid is less likely to be adsorbed in the desiccating agent, whereby heat decomposition is less likely to occur and as a result, deterioration of materials constituting the heat cycle system and formation of contaminants can be suppressed.

The size of the zeolite desiccating agent is preferably from about 0.5 to about 5 mm, since if it is too small, a valve or a thin portion in pipelines of the heat cycle system may be clogged, and if it is too large, the drying capacity will be decreased. Its shape is preferably granular or cylindrical.

The zeolite desiccating agent may be formed into an optional shape by solidifying powdery zeolite by a binding agent (such as bentonite). So long as the desiccating agent is composed mainly of the zeolite desiccating agent, other desiccating agent (such as silica gel or activated alumina) may be used in combination.

The proportion of the zeolite desiccating agent based on the composition for a heat cycle system is not particularly limited.

If non-condensing gas is included in the heat cycle system, it has adverse effects such as heat transfer failure in the condenser or the evaporator and an increase in the working pressure, and it is necessary to suppress its inclusion as far as possible. Particularly, oxygen which is one of non-condensing gases reacts with the working fluid or the refrigerant oil and promotes their decomposition.

The non-condensing gas concentration is preferably at most 1.5 vol%, particularly preferably at most 0.5 vol% by the volume ratio based on the working fluid, in a gaseous phase of the working fluid.

According to the above-described heat cycle system of the present invention, which employs the working fluid of the present invention having high stability, cycle performance practically sufficient as an alternative to R410A or HFC-134a can be obtained while suppressing influence over global warming, and there is substantially no problem with respect to the temperature glide.

EXAMPLES

Now, the present invention will be described in further detail with reference to Examples. However, it should be understood that the present invention is by no means restricted to such specific Examples.

(Test on self-decomposition property of HFO-1132 and mixed fluid containing it)

The test on self-decomposition property was carried out using as samples a to f HFO-1132(Z) by itself, HFO-1132(E) by itself, and mixed fluids of either of them and HFC-32, HFC-125, HFC-134a and HFO-1234yf in proportions as identified in Table 3, as follows.

Using a spherical pressure resistant reactor having an internal capacity of 650 cm$^3$, by method in accordance with method A recommended as equipment for measurement of the combustion range of a gas mixture containing halogen, by individual notifications in High Pressure Gas Safety Act, whether chain self-decomposition reaction of each of the samples a to f occurred or not was confirmed.

Ignition was conducted by a method of fusing a platinum wire having an outer diameter of 0.5 mm and a length of 25 mm under a voltage of 10 V at an electric current of 50 A (hot wire method).

The sample a was enclosed in a spherical pressure resistant reactor having an internal capacity of 650 cm$^3$ and having a temperature controlled to a predetermined temperature from the outside, to a predetermined pressure, and a platinum wire placed in the interior was fused by heating by applying a predetermined voltage thereby to ignite the sample a at a melting point (about 1,800°C) of the platinum wire, and temperature and pressure changes in the pressure resistant reactor after ignition by fusing were measured. In a case where a pressure increase and a temperature increase were confirmed, such a case was evaluated that self-decomposition reaction occurred. The same test was conducted with respect to the samples b to f, to evaluate the self-decomposition property. The results are shown in Table 3. The pressure in Table 3 is the gauge pressure.

[Table 3]

| Sample | Composition of sample (mass%) | | | | | | Pressure [MPaG] | | Temperature [°C] | | Self-decomposition reaction |
|---|---|---|---|---|---|---|---|---|---|---|---|
| | HFO-1132(Z) | HFO-1132(E) | HFC-32 | HFC-125 | HFC-134a | HFO-1234yf | Before ignition | After ignition | Before ignition | After ignition | |
| a | 100 | - | - | - | - | - | 0.98 | 4.8 | 250 | 291 | Occurred |
| b | - | 100 | - | - | - | - | 0.98 | 4.8 | 250 | 291 | Occurred |
| c | 80 | - | 10 | - | 10 | - | 0.98 | 1.0 | 250 | 250 | Nil |
| d | 80 | - | - | 10 | - | 10 | 0.98 | 1.0 | 250 | 250 | Nil |
| e | - | 80 | 10 | - | - | 10 | 0.98 | 1.0 | 250 | 250 | Nil |
| f | - | 80 | - | 10 | 10 | - | 0.98 | 1.0 | 250 | 250 | Nil |

As shown in Table 3, HFO-1132(Z) by itself and HFO-1132(E) by itself were confirmed to have self-decomposition property. Further, it was confirmed that mixed fluids having no self-decomposition property could be obtained by using HFO-1132(Z) or HFO-1132(E) in combination with a HFC or a HFO having no self-decomposition property in a content of 20 mass%, as in the case of the samples c to d. The compositions of the samples c to d are the same as the compositions of the working fluids in Ex. 14, 70, 126 and 98 described hereinafter.

With the working fluid of the present invention, even having a composition with self-decomposition property, restrictions on the conditions and the apparatus of a heat cycle system can be reduced as compared with HFO-1132(Z) or HFO-1132(E) by itself. That is, the working fluid of the present invention, even having a composition with self-decomposition property, may be used for a heat cycle system with careful handling depending upon the conditions of use or the apparatus. However, by selecting the above-confirmed composition having no self-decomposition property, a working fluid having high refrigerating cycle performance and having high stability can be obtained.

[Ex. 1 to 140]

In Ex. 1 to 70, a working fluid obtained by mixing HFO-1132(Z) and two members selected from HFC-32, HFC-125, HFC-134a, HFO-1234yf and HFO-1234ze(E) in a proportion as identified in Tables 5 to 9 was prepared, and by the above method under the above temperature conditions of a standard refrigerating cycle, (A) the temperature glide, the relative refrigerating capacity (B1) $RQ_{R410A}$ and the relative coefficient of performance (C1) $RCOP_{R410A}$ based on R410A, and the relative refrigerating capacity (B2) $RQ_{R134a}$ and the relative coefficient of performance (C2) $RCOP_{R134a}$ based on HFC-134a, were obtained The results are shown in Tables 5 to 9.

In Ex. 71 to 140, a working fluid obtained by mixing HFO-1132(E) and two members selected from HFC-32, HFC-125, HFC-134a, HFO-1234yf and HFO-1234ze(E) in a proportion as identified in Tables 10 to 14 was prepared, and by the above method under the above temperature conditions of a standard refrigerating cycle, (A) the temperature glide, the relative refrigerating capacity (B1) $RQ_{R410A}$ and the relative coefficient of performance (C1) $RCOP_{R410A}$ based on R410A, and the relative refrigerating capacity (B2) $RQ_{R134a}$ and the relative coefficient of performance (C2) $RCOP_{R134a}$ based on HFC-134a, were obtained. The results are shown in Tables 10 to 14.

Further, GWP of each working fluid was obtained as a weighted average by the composition mass based on GWPs of the respective compounds as identified in Table 4. That is, GWP of each working fluid was obtained by dividing the sum of products of mass% and GWP of the respective compounds constituting the working fluid by 100. The values "10" of GWPs of HFO-1132(Z) and HFO-1132(E) are values estimated from known GWPs of HFO, GWP of HFO-1234ze(E) of 6 and GWP of HFO-1234yf of 4. The results are shown in Tables 5 to 14.

[Table 4]

| Compound | GWP |
|---|---|
| HFO-1132(Z) | 10 |
| HFO-1132(E) | 10 |
| HFO-1234yf | 4 |
| HFC-32 | 675 |
| HFC-134a | 1,430 |
| HFC-125 | 3,500 |
| HFO-1234ze(E) | 6 |

[Table 5]

| Ex. | Composition (mass%) | | | Temperature glide | Based on HFC-134a | | Based on R410A | | GWP |
|---|---|---|---|---|---|---|---|---|---|
| | HFO-1132(Z) | HFC-32 | HFC-134a | | RCOP$_{R134a}$ | RQ$_{R134a}$ | RCOP$_{R410A}$ | RQ$_{R410A}$ | |
| 1 | 20 | 70 | 10 | 2.7 | 0.95 | 2.17 | 1.03 | 0.96 | 618 |
| 2 | 20 | 60 | 20 | 3.7 | 0.96 | 2.04 | 1.04 | 0.90 | 693 |
| 3 | 20 | 40 | 40 | 4.9 | 0.97 | 1.75 | 1.06 | 0.77 | 844 |
| 4 | 20 | 20 | 60 | 4.2 | 0.99 | 1.44 | 1.07 | 0.64 | 995 |
| 5 | 20 | 10 | 70 | 2.8 | 0.99 | 1.28 | 1.08 | 0.57 | 1071 |
| 6 | 40 | 50 | 10 | 5.6 | 0.96 | 1.89 | 1.05 | 0.84 | 485 |
| 7 | 40 | 40 | 20 | 5.8 | 0.97 | 1.76 | 1.06 | 0.78 | 560 |
| 8 | 40 | 20 | 40 | 4.7 | 0.99 | 1.47 | 1.07 | 0.65 | 711 |
| 9 | 60 | 30 | 10 | 7.8 | 0.99 | 1.59 | 1.07 | 0.71 | 352 |
| 10 | 60 | 20 | 20 | 6.4 | 1.00 | 1.45 | 1.08 | 0.64 | 427 |
| 11 | 60 | 10 | 30 | 4.1 | 1.00 | 1.30 | 1.09 | 0.58 | 503 |
| 12 | 70 | 20 | 10 | 7.5 | 1.00 | 1.43 | 1.08 | 0.63 | 285 |
| 13 | 70 | 10 | 20 | 4.8 | 1.01 | 1.28 | 1.09 | 0.57 | 361 |
| 14 | 80 | 10 | 10 | 5.6 | 1.01 | 1.26 | 1.09 | 0.56 | 219 |

[Table 6]

| Ex. | Composition (mass%) | | | Temperature glide | Based on HFC-134a | | Based on R410A | | GWP |
|---|---|---|---|---|---|---|---|---|---|
| | HFO-1132(Z) | HFC-32 | HFO-1234yf | | $RCOP_{R134a}$ | $RQ_{R134a}$ | $RCOP_{R410A}$ | $RQ_{R410A}$ | |
| 15 | 20 | 70 | 10 | 2.4 | 0.95 | 2.18 | 1.03 | 0.97 | 475 |
| 16 | 20 | 60 | 20 | 3.2 | 0.95 | 2.05 | 1.03 | 0.91 | 408 |
| 17 | 20 | 40 | 40 | 4.5 | 0.96 | 1.77 | 1.04 | 0.79 | 274 |
| 18 | 20 | 20 | 60 | 4.4 | 0.97 | 1.45 | 1.06 | 0.64 | 139 |
| 19 | 20 | 10 | 70 | 3.1 | 0.98 | 1.27 | 1.06 | 0.56 | 72 |
| 20 | 40 | 50 | 10 | 5.5 | 0.96 | 1.90 | 1.04 | 0.84 | 342 |
| 21 | 40 | 40 | 20 | 5.7 | 0.97 | 1.77 | 1.05 | 0.79 | 275 |
| 22 | 40 | 20 | 40 | 4.8 | 0.98 | 1.48 | 1.07 | 0.66 | 141 |
| 23 | 60 | 30 | 10 | 7.8 | 0.99 | 1.60 | 1.07 | 0.71 | 209 |
| 24 | 60 | 20 | 20 | 6.6 | 0.99 | 1.45 | 1.08 | 0.65 | 142 |
| 25 | 60 | 10 | 30 | 4.4 | 1.00 | 1.30 | 1.08 | 0.58 | 75 |
| 26 | 70 | 20 | 10 | 7.6 | 1.00 | 1.43 | 1.08 | 0.63 | 142 |
| 27 | 70 | 10 | 20 | 5.1 | 1.00 | 1.28 | 1.09 | 0.57 | 75 |
| 28 | 80 | 10 | 10 | 5.6 | 1.01 | 1.26 | 1.09 | 0.56 | 76 |

[Table 7]

| Ex. | Composition (mass%) | | | Temperature glide | Based on HFC-134a | | Based on R410A | | GWP |
|---|---|---|---|---|---|---|---|---|---|
| | HFO-1132(Z) | HFC-125 | HFC-134a | | $RCOP_{R134a}$ | $RQ_{R134a}$ | $RCOP_{R410A}$ | $RQ_{R410A}$ | |
| 29 | 20 | 70 | 10 | 2.3 | 0.94 | 1.54 | 1.02 | 0.68 | 2595 |
| 30 | 20 | 60 | 20 | 2.6 | 0.95 | 1.47 | 1.03 | 0.65 | 2388 |
| 31 | 20 | 40 | 40 | 2.5 | 0.97 | 1.33 | 1.05 | 0.59 | 1974 |
| 32 | 20 | 20 | 60 | 1.6 | 0.98 | 1.21 | 1.07 | 0.54 | 1560 |
| 33 | 20 | 10 | 70 | 0.9 | 0.99 | 1.16 | 1.08 | 0.51 | 1353 |
| 34 | 40 | 50 | 10 | 4.2 | 0.97 | 1.42 | 1.06 | 0.63 | 1897 |
| 35 | 40 | 40 | 20 | 3.5 | 0.98 | 1.36 | 1.06 | 0.60 | 1690 |
| 36 | 40 | 20 | 40 | 1.9 | 0.99 | 1.25 | 1.08 | 0.55 | 1276 |
| 37 | 60 | 30 | 10 | 4.7 | 1.00 | 1.28 | 1.08 | 0.57 | 1199 |
| 38 | 60 | 20 | 20 | 3.3 | 1.00 | 1.23 | 1.09 | 0.55 | 992 |
| 39 | 60 | 10 | 30 | 1.9 | 1.01 | 1.19 | 1.09 | 0.53 | 785 |
| 40 | 70 | 20 | 10 | 4.0 | 1.01 | 1.21 | 1.09 | 0.54 | 850 |
| 41 | 70 | 10 | 20 | 2.3 | 1.01 | 1.17 | 1.10 | 0.52 | 643 |
| 42 | 80 | 10 | 10 | 2.7 | 1.02 | 1.14 | 1.10 | 0.51 | 501 |

[Table 8]

| Ex. | Composition (mass%) | | | Temperature glide | Based on HFC-134a | | Based on R410A | | GWP |
|---|---|---|---|---|---|---|---|---|---|
| | HFO-1132(Z) | HFC-134a | HFO-1234ze(E) | | $RCOP_{R134a}$ | $RQ_{R134a}$ | $RCOP_{R410A}$ | $RQ_{R410A}$ | |
| 43 | 20 | 10 | 70 | 1.4 | 1.00 | 0.96 | 1.08 | 0.43 | 149 |
| 44 | 20 | 20 | 60 | 1.2 | 1.00 | 1.00 | 1.08 | 0.44 | 292 |
| 45 | 20 | 40 | 40 | 0.7 | 1.00 | 1.05 | 1.08 | 0.47 | 576 |
| 46 | 20 | 60 | 20 | 0.3 | 1.00 | 1.09 | 1.08 | 0.48 | 861 |
| 47 | 20 | 70 | 10 | 0.2 | 1.00 | 1.10 | 1.08 | 0.49 | 1004 |
| 48 | 40 | 10 | 50 | 0.4 | 1.01 | 1.05 | 1.09 | 0.47 | 150 |
| 49 | 40 | 20 | 40 | 0.3 | 1.01 | 1.08 | 1.09 | 0.48 | 292 |
| 50 | 40 | 40 | 20 | 0.1 | 1.00 | 1.12 | 1.09 | 0.50 | 577 |
| 51 | 60 | 10 | 30 | 0.2 | 1.01 | 1.09 | 1.10 | 0.48 | 151 |
| 52 | 60 | 20 | 20 | 0.4 | 1.01 | 1.11 | 1.10 | 0.49 | 293 |
| 53 | 60 | 30 | 10 | 0.4 | 1.01 | 1.13 | 1.10 | 0.50 | 436 |
| 54 | 70 | 10 | 20 | 0.4 | 1.02 | 1.09 | 1.10 | 0.48 | 151 |
| 55 | 70 | 20 | 10 | 0.6 | 1.02 | 1.11 | 1.10 | 0.49 | 294 |
| 56 | 80 | 10 | 10 | 0.5 | 1.02 | 1.08 | 1.11 | 0.48 | 152 |

[Table 9]

| Ex. | Composition (mass%) | | | Temperature glide | Based on HFC-134a | | Based on R410A | | GWP |
|---|---|---|---|---|---|---|---|---|---|
| | HFO-1132(Z) | HFC-125 | HFO-1234yf | | $RCOP_{R134a}$ | $RQ_{R134a}$ | $RCOP_{R410A}$ | $RQ_{R410A}$ | |
| 57 | 20 | 70 | 10 | 2.0 | 0.93 | 1.56 | 1.01 | 0.69 | 2452 |
| 58 | 20 | 60 | 20 | 2.3 | 0.94 | 1.49 | 1.02 | 0.66 | 2103 |
| 59 | 20 | 40 | 40 | 2.6 | 0.95 | 1.36 | 1.03 | 0.60 | 1404 |
| 60 | 20 | 20 | 60 | 2.1 | 0.96 | 1.22 | 1.05 | 0.54 | 704 |
| 61 | 20 | 10 | 70 | 1.4 | 0.97 | 1.15 | 1.05 | 0.51 | 355 |
| 62 | 40 | 50 | 10 | 4.3 | 0.97 | 1.43 | 1.05 | 0.63 | 1754 |
| 63 | 40 | 40 | 20 | 3.8 | 0.97 | 1.37 | 1.06 | 0.61 | 1405 |
| 64 | 40 | 20 | 40 | 2.3 | 0.98 | 1.26 | 1.07 | 0.56 | 706 |
| 65 | 60 | 30 | 10 | 4.9 | 1.00 | 1.28 | 1.08 | 0.57 | 1056 |
| 66 | 60 | 20 | 20 | 3.7 | 1.00 | 1.24 | 1.08 | 0.55 | 707 |
| 67 | 60 | 10 | 30 | 2.2 | 1.00 | 1.19 | 1.09 | 0.53 | 357 |
| 68 | 70 | 20 | 10 | 4.3 | 1.01 | 1.21 | 1.09 | 0.54 | 707 |
| 69 | 70 | 10 | 20 | 2.7 | 1.01 | 1.17 | 1.09 | 0.52 | 358 |
| 70 | 80 | 10 | 10 | 2.9 | 1.01 | 1.14 | 1.10 | 0.51 | 358 |

[Table 10]

| Ex. | Composition (mass%) | | | Temperature glide | Based on HFC-134a | | Based on R410A | | GWP |
|---|---|---|---|---|---|---|---|---|---|
| | HFO-1132(E) | HFC-32 | HFC-134a | | $RCOP_{R134a}$ | $RQ_{R134a}$ | $RCOP_{R410A}$ | $RQ_{R410A}$ | |
| 71 | 20 | 10 | 70 | 5.9 | 0.97 | 1.49 | 1.05 | 0.66 | 1071 |
| 72 | 20 | 20 | 60 | 6.2 | 0.97 | 1.66 | 1.05 | 0.73 | 995 |
| 73 | 20 | 40 | 40 | 5.2 | 0.95 | 1.97 | 1.03 | 0.87 | 844 |
| 74 | 20 | 60 | 20 | 3.0 | 0.94 | 2.28 | 1.02 | 1.01 | 693 |
| 75 | 20 | 70 | 10 | 1.6 | 0.93 | 2.42 | 1.01 | 1.07 | 618 |
| 76 | 40 | 10 | 50 | 4.2 | 0.95 | 1.74 | 1.03 | 0.77 | 787 |
| 77 | 40 | 20 | 40 | 4.1 | 0.94 | 1.90 | 1.02 | 0.84 | 711 |
| 78 | 40 | 40 | 20 | 2.6 | 0.93 | 2.23 | 1.01 | 0.99 | 560 |
| 79 | 60 | 10 | 30 | 2.1 | 0.94 | 1.94 | 1.02 | 0.86 | 503 |
| 80 | 60 | 20 | 20 | 2.0 | 0.93 | 2.11 | 1.01 | 0.94 | 427 |
| 81 | 60 | 30 | 10 | 1.5 | 0.93 | 2.28 | 1.00 | 1.01 | 352 |
| 82 | 70 | 10 | 20 | 1.5 | 0.94 | 2.02 | 1.02 | 0.90 | 361 |
| 83 | 70 | 20 | 10 | 1.5 | 0.93 | 2.19 | 1.01 | 0.97 | 285 |
| 84 | 80 | 10 | 10 | 1.2 | 0.94 | 2.09 | 1.02 | 0.93 | 219 |

[Table 11]

| Ex. | Composition (mass%) | | | Temperature glide | Based on HFC-134a | | Based on R410A | | GWP |
|---|---|---|---|---|---|---|---|---|---|
| | HFO-1132(E) | HFC-125 | HFC-134a | | $RCOP_{R134a}$ | $RQ_{R134a}$ | $RCOP_{R410A}$ | $RQ_{R410A}$ | |
| 85 | 20 | 10 | 70 | 4.9 | 0.97 | 1.38 | 1.05 | 0.61 | 1353 |
| 86 | 20 | 20 | 60 | 4.9 | 0.96 | 1.44 | 1.04 | 0.64 | 1560 |
| 87 | 20 | 40 | 40 | 4.4 | 0.94 | 1.57 | 1.02 | 0.70 | 1974 |
| 88 | 20 | 60 | 20 | 2.8 | 0.92 | 1.73 | 1.00 | 0.77 | 2388 |
| 89 | 20 | 70 | 10 | 1.6 | 0.90 | 1.81 | 0.98 | 0.80 | 2595 |
| 90 | 40 | 10 | 50 | 3.4 | 0.95 | 1.63 | 1.03 | 0.72 | 1069 |
| 91 | 40 | 20 | 40 | 3.1 | 0.94 | 1.70 | 1.02 | 0.75 | 1276 |
| 92 | 40 | 40 | 20 | 1.8 | 0.93 | 1.85 | 1.01 | 0.82 | 1690 |
| 93 | 60 | 10 | 30 | 1.4 | 0.94 | 1.83 | 1.02 | 0.81 | 785 |
| 94 | 60 | 20 | 20 | 1.1 | 0.94 | 1.90 | 1.02 | 0.84 | 992 |
| 95 | 60 | 30 | 10 | 0.7 | 0.93 | 1.97 | 1.01 | 0.88 | 1199 |
| 96 | 70 | 10 | 20 | 0.7 | 0.94 | 1.91 | 1.02 | 0.85 | 643 |
| 97 | 70 | 20 | 10 | 0.6 | 0.94 | 1.98 | 1.01 | 0.88 | 850 |
| 98 | 80 | 10 | 10 | 0.4 | 0.94 | 1.97 | 1.02 | 0.88 | 501 |

[Table 12]

| Ex. | Composition (mass%) | | | Temperature glide | Based on HFC-134a | | Based on R410A | | GWP |
|---|---|---|---|---|---|---|---|---|---|
| | HFO-1132(E) | HFC-125 | HFO-1234ze(E) | | $RCOP_{R134a}$ | $RQ_{R134a}$ | $RCOP_{R410A}$ | $RQ_{R410A}$ | |
| 99 | 20 | 10 | 70 | 8.7 | 0.98 | 1.21 | 1.06 | 0.53 | 356 |
| 100 | 20 | 20 | 60 | 8.5 | 0.97 | 1.29 | 1.05 | 0.57 | 706 |
| 101 | 20 | 40 | 40 | 6.8 | 0.94 | 1.48 | 1.02 | 0.65 | 1404 |
| 102 | 20 | 60 | 20 | 3.8 | 0.91 | 1.67 | 0.99 | 0.74 | 2103 |
| 103 | 20 | 70 | 10 | 2.0 | 0.89 | 1.78 | 0.97 | 0.79 | 2453 |
| 104 | 40 | 10 | 50 | 6.4 | 0.96 | 1.49 | 1.04 | 0.66 | 357 |
| 105 | 40 | 20 | 40 | 5.4 | 0.94 | 1.59 | 1.02 | 0.70 | 706 |
| 106 | 40 | 40 | 20 | 2.9 | 0.92 | 1.79 | 1.00 | 0.79 | 1405 |
| 107 | 60 | 10 | 30 | 2.9 | 0.94 | 1.74 | 1.02 | 0.77 | 358 |
| 108 | 60 | 20 | 20 | 2.0 | 0.93 | 1.84 | 1.01 | 0.82 | 707 |
| 109 | 60 | 30 | 10 | 1.2 | 0.93 | 1.95 | 1.00 | 0.86 | 1057 |
| 110 | 70 | 10 | 20 | 1.6 | 0.94 | 1.85 | 1.02 | 0.82 | 358 |
| 111 | 70 | 20 | 10 | 1.0 | 0.93 | 1.95 | 1.01 | 0.87 | 708 |
| 112 | 80 | 10 | 10 | 0.7 | 0.94 | 1.95 | 1.02 | 0.86 | 426 |

[Table 13]

| Ex. | Composition (mass%) | | | Temperature glide | Based on HFC-134a | | Based on R410A | | GWP |
|---|---|---|---|---|---|---|---|---|---|
| | HFO-1132(E) | HFC-32 | HFO-1234yf | | $RCOP_{R134a}$ | $RQ_{R134a}$ | $RCOP_{R410A}$ | $RQ_{R410A}$ | |
| 113 | 20 | 10 | 70 | 5.8 | 0.95 | 1.48 | 1.03 | 0.66 | 72 |
| 114 | 20 | 20 | 60 | 5.8 | 0.95 | 1.66 | 1.03 | 0.74 | 139 |
| 115 | 20 | 40 | 40 | 4.4 | 0.94 | 1.99 | 1.01 | 0.88 | 274 |
| 116 | 20 | 60 | 20 | 2.3 | 0.93 | 2.29 | 1.00 | 1.01 | 408 |
| 117 | 20 | 70 | 10 | 1.1 | 0.92 | 2.42 | 1.00 | 1.08 | 475 |
| 118 | 40 | 10 | 50 | 3.9 | 0.94 | 1.74 | 1.02 | 0.77 | 74 |
| 119 | 40 | 20 | 40 | 3.7 | 0.93 | 1.91 | 1.01 | 0.85 | 141 |
| 120 | 40 | 40 | 20 | 2.1 | 0.92 | 2.24 | 1.00 | 0.99 | 275 |
| 121 | 60 | 10 | 30 | 1.9 | 0.93 | 1.94 | 1.01 | 0.86 | 75 |
| 122 | 60 | 20 | 20 | 1.8 | 0.93 | 2.12 | 1.01 | 0.94 | 142 |
| 123 | 60 | 30 | 10 | 1.3 | 0.92 | 2.28 | 1.00 | 1.01 | 209 |
| 124 | 70 | 10 | 20 | 1.4 | 0.94 | 2.02 | 1.01 | 0.90 | 75 |
| 125 | 70 | 20 | 10 | 1.4 | 0.93 | 2.20 | 1.01 | 0.97 | 142 |
| 126 | 80 | 10 | 10 | 1.1 | 0.94 | 2.09 | 1.01 | 0.93 | 76 |

[Table 14]

| Ex. | Composition (mass%) | | | Temperature glide | Based on HFC-134a | | Based on R410A | | GWP |
|---|---|---|---|---|---|---|---|---|---|
| | HFO-1132(E) | HFC-125 | HFO-1234yf | | $RCOP_{R134a}$ | $RQ_{R134a}$ | $RCOP_{R410A}$ | $RQ_{R410A}$ | |
| 127 | 20 | 10 | 70 | 4.9 | 0.95 | 1.36 | 1.03 | 0.61 | 355 |
| 128 | 20 | 20 | 60 | 4.7 | 0.94 | 1.44 | 1.02 | 0.64 | 704 |
| 129 | 20 | 40 | 40 | 6.8 | 0.94 | 1.48 | 1.02 | 0.65 | 1404 |
| 130 | 20 | 60 | 20 | 3.8 | 0.91 | 1.67 | 0.99 | 0.74 | 2103 |
| 131 | 20 | 70 | 10 | 0.9 | 0.88 | 1.82 | 0.96 | 0.81 | 2452 |
| 132 | 40 | 10 | 50 | 3.2 | 0.94 | 1.62 | 1.01 | 0.72 | 356 |
| 133 | 40 | 20 | 40 | 2.6 | 0.93 | 1.70 | 1.01 | 0.75 | 706 |
| 134 | 40 | 40 | 20 | 1.3 | 0.91 | 1.86 | 0.99 | 0.82 | 1405 |
| 135 | 60 | 10 | 30 | 1.2 | 0.94 | 1.83 | 1.01 | 0.81 | 357 |
| 136 | 60 | 20 | 20 | 0.9 | 0.93 | 1.90 | 1.01 | 0.84 | 707 |
| 137 | 60 | 30 | 10 | 0.6 | 0.92 | 1.98 | 1.00 | 0.88 | 1056 |
| 138 | 70 | 10 | 20 | 0.6 | 0.94 | 1.91 | 1.02 | 0.85 | 358 |
| 139 | 70 | 20 | 10 | 0.5 | 0.93 | 1.98 | 1.01 | 0.88 | 707 |
| 140 | 80 | 10 | 10 | 0.4 | 0.94 | 1.97 | 1.02 | 0.88 | 358 |

INDUSTRIAL APPLICABILITY

The working fluid of the present invention is useful for a refrigerant for a refrigerating apparatus (such as a built-in showcase, a separate showcase, an industrial fridge freezer, a vending machine or an ice making machine), a refigerant for an air-conditioning apparatus (such as a room air-conditioner, a store package air-conditioner, a building package air-conditioner, a plant package air-conditioner, a gas engine heat pump, a train air-conditioning system or an automobile air-conditioning system), a working fluid for a power generation system (such as exhaust heat recovery power generation), a working fluid for a latent heat transport apparaus (such as a heat pipe) or a secondary cooling fluid.

The entire disclosure of Japanese Patent Application No. 2014-118163 filed on June 6, 2014 including specification, claims, drawings and summary is incorporated herein by reference in its entirety.

REFERENCE SYMBOLS

10: Refrigerating cycle system, 11: compressor, 12: condenser, 13: expansion valve, 14: evaporator, 15, 16: pump.

**Claims**

1.  A working fluid for heat cycle, which contains at least two members selected from a saturated hydrofluorocarbon and a hydrofluorocarbon having a carbon-carbon double bond other than 1,2-difluoroethylene, and 1,2-difluoroethylene.

2.  The working fluid for heat cycle according to Claim 1, wherein 1,2-difluoroethylene is trans-1,2-difluoroethylene, cis-1,2-difluoroethylene or a mixture thereof.

3.  The working fluid for heat cycle according to Claim 1 or 2, wherein the proportion of 1,2-difluoroethylene is at most 80 mass% based on the entire amount of the working fluid for heat cycle.

4.  The working fluid for heat cycle according to any one of Claims 1 to 3, wherein the proportion of 1,2-difluoroethylene is from 20 to 80 mass% based on the entire amount of the working fluid for heat cycle.

5.  The working fluid for heat cycle according to any one of Claims 1 to 4, wherein the temperature glide is at most 8°C, which is represented by a difference between the evaporation initiation temperature and the evaporation completion temperature in an evaporator when applied to a standard refrigerating cycle under conditions such that the evaporation temperature is 0°C (in the case of a non-azeotropic mixture, the average temperature of the evaporation initiation temperature and the evaporation completion temperature), the condensing temperature is 40°C (in the case of a non-azeotropic mixture, the average temperature of the condensation initiation temperature and the condensation completion temperature), the supercooling degree (SC) is 5°C, and the degree of superheat (SH) is 5°C.

6.  The working fluid for heat cycle according to any one of Claims 1 to 5, wherein the relative refrigerating capacity ($RQ_{410A}$) calculated in accordance with the following formula (B1) is from 0.70 to 1.60, and the relative coefficient of performance ($RCOP_{R410A}$) calculated in accordance with the following formula (C1) is from 0.85 to 1.20:

$$\text{Relative refrigerating capacity } (RQ_{R410A}) = \frac{\text{Refrigerating capacity of sample } (Q_{sample})}{\text{Refrigerating capacity of R410A } (Q_{R410A})} \tag{B1}$$

$$\text{Relative coefficient of performance } (RCOP_{R410A}) = \frac{\text{Coefficient of performance of sample } (COP_{sample})}{\text{Coefficient of performance of R410A } (COP_{R410A})} \tag{C1}$$

wherein R410A is a mixture of difluoromethane and pentafluoroethane in a mass ratio of 1:1, and the sample is the working fluid to be subjected to relative evaluation; and the refrigerating capacity and the coefficient of performance of each of the sample and R410A are respectively an output (kW), and a value obtained by dividing the output (kW) by the required power consumption (kW), when each of the sample and R410A is applied to a standard refrigerating cycle under conditions such that the evaporation temperature is 0°C (in the case of a non-azeotropic mixture, the average temperature of the evaporation initiation temperature and the evaporation completion temperature), the condensing temperature is 40°C (in the case of a non-azeotropic mixture, the average temperature of the condensation initiation temperature and the condensation completion temperature), the supercooling degree (SC) is 5°C, and the degree of superheat (SH) is 5°C.

7.  The working fluid for heat cycle according to any one of Claims 1 to 6, wherein the relative refrigerating capacity ($RQ_{R134a}$) calculated in accordance with the following formula (B2) is from 0.70 to 1.60, and the relative coefficient of performance ($RCOP_{R134a}$) calculated in accordance with the following formula (C2) is from 0.85 to 1.20:

$$\text{Relative refrigerating capacity } (RQ_{R134a}) = \frac{\text{Refrigerating capacity of sample } (Q_{sample})}{\text{Refrigerating capacity of R134a } (Q_{R134a})} \quad (B2)$$

$$\text{Relative coefficient of performance } (RCOP_{R134a}) = \frac{\text{Coefficient of performance of sample } (COP_{sample})}{\text{Coefficient of performance of R134a } (COP_{R134a})} \quad (C2)$$

wherein R134a is 1,1,1,2-tetrafluoroethane, and the sample is the working fluid to be subjected to relative evaluation; and the refrigerating capacity and the coefficient of performance of each of the sample and R134a are respectively an output (kW), and a value obtained by dividing the output (kW) by the required power consumption (kW), when each of the sample and R134a is applied to a standard refrigerating cycle under conditions such that the evaporation temperature is 0°C (in the case of a non-azeotropic mixture, the average temperature of the evaporation initiation temperature and the evaporation completion temperature), the condensing temperature is 40°C (in the case of a non-azeotropic mixture, the average temperature of the condensation initiation temperature and the condensation completion temperature), the supercooling degree (SC) is 5°C, and the degree of superheat (SH) is 5°C.

8.  The working fluid for heat cycle according to any one of Claims 1 to 7, wherein the saturated hydrofluorocarbon is at least one member selected from difluoromethane, 1,1-difluoroethane, 1,1,1,2-tetrafluoroethane and pentafluoroethane.

9.  The working fluid for heat cycle according to any one of Claims 1 to 8, wherein the hydrofluorocarbon having a carbon-carbon double bond is at least one member selected from 1,3,3,3-tetrafluoropropene and 2,3,3,3-tetrafluoropropene.

10. A composition for a heat cycle system, which comprises the working fluid for heat cycle as defined in any one of Claims 1 to 9, and a refrigerant oil.

11. A heat cycle system, which employs the composition for a heat cycle system as defined in Claim 10.

12. The heat cycle system according to Claim 11, which is a refrigerating apparatus, an air-conditioning apparatus, a power generation system, a heat transport apparatus or a secondary cooling machine.

13. The heat cycle system according to Claim 12, which is a room air-conditioner, a store package air-conditioner, a building package air-conditioner, a plant package air-conditioner, a gas engine heat pump, a train air-conditioning system, an automobile air-conditioning system, a built-in showcase, a separate showcase, an industrial fridge freezer, an ice making machine or a vending machine.

Fig. 1

Fig. 2

## INTERNATIONAL SEARCH REPORT

| International application No. |
|---|
| PCT/JP2015/064938 |

**A. CLASSIFICATION OF SUBJECT MATTER**
*C09K5/04(2006.01)i*

According to International Patent Classification (IPC) or to both national classification and IPC

**B. FIELDS SEARCHED**

Minimum documentation searched (classification system followed by classification symbols)
C09K5/04

Documentation searched other than minimum documentation to the extent that such documents are included in the fields searched
| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | CN 102994052 A (Chao XU),<br>27 March 2013 (27.03.2013),<br>entire text; particularly, claims 1 to 2;<br>example 2<br>(Family: none) | 1-7,9-13<br>8 |
| A | US 2011/0252801 A1 (E.I.DU PONT NEMOURS AND CO.),<br>20 October 2011 (20.10.2011),<br>claims 1 to 19; examples 1 to 2<br>(Family: none) | 1-13 |
| A | WO 2012/157765 A1 (Asahi Glass Co., Ltd.),<br>22 November 2012 (22.11.2012),<br>examples; claims 1 to 13<br>& US 2014/0077123 A1     & EP 2711407 A1<br>& CN 103547652 A          & RU 2013156342 A | 1-13 |

☐ Further documents are listed in the continuation of Box C.    ☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>11 August 2015 (11.08.15) | Date of mailing of the international search report<br>18 August 2015 (18.08.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012157765 A
- US 4249412 A
- JP 10502737 A
- JP 2007511645 A
- JP 2008500437 A
- JP 2008531836 A
- JP 2014118163 A